# EUROPÄISCHE PATENTSCHRIFT

(11) **EP 3 597 026 B1**
(45) Veröffentlichungstag und Bekanntmachung des Hinweises auf die Patenterteilung: **10.03.2021**
(21) Anmeldenummer: 19168574.2
(22) Anmeldetag: 11.04.2019
(51) Int. Cl.: A01D 41/12, F01P 11/06, F28G 1/16, F28G 3/16

(54) **KÜHLVORRICHTUNG**
COOLING DEVICE
DISPOSITIF DE REFROIDISSEMENT

(30) Priorität: 21.06.2018 DE 102018114968
(43) Veröffentlichungstag der Anmeldung: 22.01.2020
(73) Patentinhaber: CLAAS Selbstfahrende Erntemaschinen GmbH, 33428 Harsewinkel (DE)
(72) Erfinder: Alterbaum, Andreas, 49186 Bad Iburg (DE)
(74) Vertreter: CLAAS Gruppe

(56) Entgegenhaltungen:
- EP-A1- 2 546 492
- JP-A- H0 849 540
- US-A- 5 217 512
- US-A1- 2012 279 525

## Beschreibung

Die vorliegende Erfindung betrifft einen Kühlerkorb mit einer Reinigungsvorrichtung gemäß dem Oberbegriff des Anspruches 1. Weiterhin betrifft die Erfindung eine selbstfahrende Erntemaschine gemäß dem Anspruch15.

Der Antrieb von selbstfahrenden Erntemaschinen erfolgt über eine Brennkraftmaschine, die vorzugsweise in deren Heckbereich angeordnet und von Verkleidungsteilen umgeben ist. Üblicherweise handelt es sich um eine wassergekühlte Brennkraftmaschine mit einem als Radiator ausgebildeten Wärmetauscher, welcher zum einen von Kühlwasser aus einem Kühlkreislauf der Brennkraftmaschine und zum anderen von der die Erntemaschine umgebenden Luft durchströmt wird. Weiterhin können innerhalb dieser Verkleidung der selbstfahrenden Erntemaschine auch Ölkühler für ein Hydrauliksystem der Erntemaschine, Ladeluftkühler, weitere Aggregate usw. angeordnet sein. Darüber hinaus kann auch die für den Verbrennungsprozess der Brennkraftmaschine über einen Abgasturbolader angesaugte Luft, die zuvor über einen Luftfilter gereinigt wird, innerhalb dieses durch Verkleidungsteile abgedeckten Bereiches angesaugt werden. Dabei muss selbstverständlich für die Kühlung des entsprechenden Wärmetauschers und auch für den Verbrennungsprozess stets eine ausreichende Luftmenge zur Verfügung stehen, die von einer Kühlvorrichtung mit einer Ansaugvorrichtung durch einen Kühlerkorb angesaugt wird.

Während eines Erntevorganges ist aber die die Erntemaschine umgebende Luft stark verunreinigt, wobei diese Verunreinigungen bei der Getreide- oder Rapsernte einen hohen Staubanteil, Anteile von Kurzstroh usw. aufweisen. Wird der selbstfahrende Mähdrescher zur Ernte von Mais eingesetzt, so kann es sich bei den Verunreinigungen der Luft zum Teil auch um Lieschblätter handeln, die die geernteten Maiskolben umschließen. Bei selbstfahrenden Feldhäckslern treten Verunreinigungen der Luft auf, bei denen es sich um Halmbestandteilen des Häckselgutes und, sofern der selbstfahrende Feldhäcksler zur Ernte von Silomais eingesetzt wird, ebenfalls um komplette Lieschblätter oder deren Bestandteilen handeln kann. Aufgrund der Anordnung der Brennkraftmaschine im Heckbereich der Erntemaschine können bei einem selbstfahrenden Mähdrescher die im Bereich der Siebe und eines Anbauhäckslers auftretenden Verunreinigungen der Luft besonders massiv die von einer Kühlluftreinigungsvorrichtung der Brennkraftmaschine und von sonstigen Kühlaggregaten angesaugte Luft verunreinigen.

Daher ist ein Kühlerkorb mit einer Reinigungsvorrichtung vorgesehen, wobei der Kühlerkorb ein Rahmenbauteil aufweist, innerhalb dessen eine siebartige Oberfläche ausgebildet ist, und die Reinigungsvorrichtung als eine sich zyklisch über die Oberfläche des Kühlerkorbes bewegende Absaugvorrichtung ausgebildet ist, welche sich auf der Oberfläche ablagernde Partikel aufnimmt.

Aus der EP 1 493 905 B1 ist eine Kühlerkorb mit einer Reinigungsvorrichtung der eingangs genannten Art bekannt, bei welcher eine Reinigung einer kreiszylindrischen Gitterfläche des rotierenden Kühlerkorbs erreicht wird, indem der Kühlerkorb mittels eines Hydromotors in Rotation versetzt wird, wodurch jeder Punkt der zylindrischen Ansaugfläche nach einer Umdrehung eine feststehende Absaugdüse eine Absaugvorrichtung passiert und der anhaftende Schmutz abgesaugt wird. An der Innenseite des Kühlerkorbes ist im Bereich der Absaugdüse ein Abschirmelement angeordnet, wodurch der unter der Düse liegende Absaugbereich vom Unterdruck des Lüfters abgeschirmt wird. Das Gebläse kann den Staub dadurch, ohne gegen den Unterdruck des Lüfters arbeiten zu müssen, absaugen. Das Prinzip des rotierenden Kühlerkorbes stößt dort an seine Grenzen, wo eine große Luftmenge benötigt wird. Da die Gitterfläche des Kühlerkorbes aufgrund seiner Geometrie relativ klein ist, können der Druckabfall und die zur Bereitstellung des erforderlichen Luftvolumenstroms benötigte Lüfterleistung stark ansteigen. Ein weiteres Problem ist die Abdichtung, die zwischen dem rotierendem Kühlerkorb und dem feststehendem Kühlerkasten erforderlich ist.

Die EP 2 754 873 A2 beschreibt einen Kühlerkorb mit einer Reinigungsvorrichtung, bei welcher eine Reinigung der Gitterfläche eines ortfesten Kühlerkorbes dadurch erreicht wird, dass eine Absaugdüse einer Absaugvorrichtung in einer linearen Bewegung zyklisch über die Gitterfläche geführt wird. Hierzu ist an beiden Seiten der feststehenden Gitterfläche eine Führung der Absaugdüse sowie eines gegenüberliegend, unterhalb der Gitterfläche, angeordneten Abschirmelementes vorgesehen. Ein außenseitig angeordneter Linearantrieb bewegt die Absaugdüse und das Abschirmelement gemeinsam entlang der Gitterfläche hin und her. Das Abschirmelement ist dabei endseitig durch schmale Stege mit der Absaugdüse verbunden. Diese Stege erfordern jedoch für das lineare Verfahren der Absaugdüse Schlitze, die den hinter der Gitterfläche liegenden Reinraumbereich partiell zum Schmutzbereich nach außen öffnen. Diese Schlitze werden durch Bürstenleisten abgedichtet werden, durch die jedoch die Stege immer wieder hindurchgleiten. Dabei stellt die Abdichtung dieser Schlitze ein großes Problem dar. Zum einen müssen die Bürstenleisten bei der Montage sehr exakt eingestellt werden, um den Antrieb nicht zu behindern und trotzdem dicht zu sein. Zum anderen tritt durch die permanente Bewegung der Stege zwischen Abschirmelement und Absaugdüse eine Ermüdung der Bürstenleisten ein. In der Folge gelangen grobe Staubpartikel, die eigentlich gut abgeschieden werden können, direkt zu den Kühllamellen und führen zu einem kontinuierlich zunehmenden Kühlleistungsverlust. Dem kann nur durch regelmäßige manuelle Reinigung der Kühlvorrichtung begegnet werden.

Aus der US 5 217 512 ist ein Kühlerkorb mit einer Reinigungsvorrichtung gemäß des Oberbegriffs des Anspruchs 1 bekannt.

Somit liegt der vorliegenden Erfindung die Aufgabe zugrunde, einen Kühlerkorb mit einer Reinigungsvorrichtung der eingangs genannten Art sowie eine selbstfahrende Erntemaschine weiterzubilden, welche die aus dem Standes der Technik bekannten Nachteile vermeidet, insbesondere die Problematik der Abdichtung.

Diese Aufgabe wird durch einen Kühlerkorb gemäß den Merkmalen des unabhängigen Anspruches 1 gelöst. Weiterhin wird diese Aufgabe durch eine selbstfahrende Erntemaschine gemäß dem Anspruch 15 gelöst.

Vorteilhafte Weiterbildungen sind Gegenstand der von den unabhängigen Patentansprüchen abhängigen Unteransprüche.

Gemäß dem Anspruch 1 wird ein Kühlerkorb mit einer Reinigungsvorrichtung vorgeschlagen, wobei der Kühlerkorb ein Rahmenbauteil aufweist, innerhalb dessen eine siebartige Oberfläche ausgebildet ist, und die Reinigungsvorrichtung als eine sich zyklisch über die Oberfläche des Kühlerkorbes bewegende Absaugvorrichtung ausgebildet ist, welche sich auf der Oberfläche ablagernde Partikel aufnimmt. Erfindungsgemäß ist vorgesehen, dass die Absaugvorrichtung zwei Absaugarme umfasst, die mittels innerhalb des Kühlerkorbes diagonal gegenüberliegend positionierter Lagerstellen um eine zu der Oberfläche vertikal orientierte Achse schwenkbar gelagert sind. Durch die erfindungsgemäße Anordnung der Lagerstellen innerhalb des Kühlerkorbes, insbesondere in dem Rahmenbauteil oder der Oberfläche, bevorzugt in deren Außen oder Randbereichen, wird das aus dem Stand der Technik bekannte Problem der Abdichtung auf einfache Weise gelöst, da die innerhalb des Kühlerkorbes angeordneten Lagerstellen keine Relativbewegung zu diesem ausführen. Die ortsfest angeordneten Lagerstellen weisen eine Abdichtung auf, mit der diese gegenüber dem Kühlerkorb, das heißt dem Rahmenbauteil oder der Oberfläche, abgedichtet sind. Die Abdichtung erfolgt zwischen der Innenseite und der Außenseite des Kühlerkorbes über die jeweilige Lagerstelle der Absaugarme. Aufgrund der fehlenden Relativbewegung zwischen den Lagerstellen und dem Kühlerkorb tritt zudem kein Verschleiß der Abdichtung auf. Zudem wird durch die Anordnung der Lagerstellen innerhalb des Kühlerkorbes eine bauraumsparende Ausgestaltung ermöglicht.

Dabei kann die Oberfläche des Kühlerkorbes als ein Gitter oder Sieb ausgeführt sein. Die jeweilige Lagerstelle kann eine Wälzlageranordnung sowie eine in dieser gelagerte Welle umfassen, an der der jeweilige Absaugarm drehfest angeordnet ist.

Insbesondere können die Absaugarme in einer Ruheposition, in der die Absaugvorrichtung inaktiv ist, zueinander benachbart positioniert sein. In der Ruheposition sind die freien Enden der Absaugarme einander zugewandt positioniert, so dass die Absaugarme zwischen sich einen etwa rechten Winkel einschließen können.

Gemäß einer bevorzugten Weiterbildung können die Absaugarme, insbesondere ausgehend von ihrer Ruheposition, jeweils um einen Winkel von zumindest 85° verschwenkbar sein. Um eine hinter dem Drehpunkt der jeweiligen Lagerstelle zurückliegende Fläche mit dem jeweiligen Absaugarmen zu erreichen, kann der Schwenkwinkel der Absaugarme bis auf 100°, insbesondere bis auf etwa 94°, erhöht werden.

Bevorzugt können die Absaugarme jeweils eine Absaugdüse und ein Abschirmelement aufweisen, welche parallel zueinander an der jeweiligen Lagerstelle angeordnet sind, wobei sich die Oberfläche zwischen der Absaugdüse und dem Abschirmelement befindet. Dadurch kann der unter der Absaugdüse liegende Absaugbereich vom erzeugten Unterdruck eines die Kühlluft ansaugenden Lüfters abgeschirmt wird. Die Absaugarme können somit den Staub absaugen, ohne gegen den Unterdruck des Lüfters arbeiten zu müssen.

Dabei kann zum Antreiben des einen Absaugarmes ein Kurbeltrieb im Bereich der Lagerstelle dieses Absaugarmes vorgesehen sein. Durch den Kurbeltrieb wird der Absaugarm mittels eines sinusförmigen Geschwindigkeitsprofils angetrieben, so dass der Absaugarm aus seiner Ruheposition um den Schwenkwinkel verschwenkt wird, bevor der Absaugarm wieder in seine Ruheposition zurücckehrt. Die Frequenz des Verschwenkens des Absaugarmes ist einstellbar. Dadurch kann auf unterschiedliche Verschmutzungsgrade auf der Oberfläche reagiert werden. Der Kurbeltrieb umfasst eine angetriebene Kurbelwelle und einen Pleuel.

Insbesondere kann der andere Absaugarm trieblich mit dem angetriebenen Absaugarm gekoppelt sein. Durch die triebliche Kopplung können die Bewegungsabläufe des durch den Kurbeltrieb angetriebenen Absaugarmes und des trieblich mit diesem gekoppelten Absaugarm synchronisiert werden.

Besonders bevorzugt kann die triebliche Kopplung dazu eingerichtet sein, dass der andere Absaugarm mittels der trieblichen Kopplung eine gegenläufige Bewegung zu dem mittels des Kurbeltriebes angetriebenen Absaugarm ausführt. Hierdurch kann gewährleistet werden, dass sich die Absaugarme überschneidungsfrei über die Oberfläche des Kühlerkorbes bewegen. Die Absaugarme können dabei jeweils einander gegenüberliegende kreissegmentförmige, insbesondere viertelkreisförmige, Flächen überstreichen, welche einander abschnittsweise überlappen.

So kann gemäß einer bevorzugten Ausführungsform die triebliche Kopplung mittels einer Koppelstange erfolgen, die mit einem Ende am Kurbeltrieb und mit ihrem anderen Ende im Bereich der diagonal gegenüberliegenden Lagerstelle an dem anderen Absaugarm angreift. Durch die Anordnung über Kreuz bewegen sich beide Absaugarme absolut synchron gegenläufig, so dass es trotz einer Überlappung der überstrichenen Fläche nicht zu einer Kollision der beiden Absaugarme kommen kann.

Dabei kann die Koppelstange in einer Ebene hinter den Abschirmelementen nageordnet sein. Dadurch ist gewährleistet, dass die Absaugarme bzw. deren jeweilige Absaugdüse und Abschirmelement im Verlauf ihrer Schwenkbewegung die Koppelstange kollisionsfrei kreuzen können.

Gemäß einer bevorzugten Weiterbildung kann zum Antreiben zumindest eines Absaugarmes ein Motor, insbesondere ein Elektromotor oder ein Hydraulikmotor, vorgesehen sein. Dabei ist es denkbar, beide Absaugarme durch jeweils einen Motor anzutreiben, wobei durch eine geeignete Ansteuerung der beiden Motoren sichergestellt werden muss, dass die Absaugarme nicht miteinander kollidieren.

Diese Antriebsvariante ist besonders dann vorteilhaft, wenn als Motor ein Hydraulikmotor verwendet wird und für dessen Antrieb ein Hydrauliksystem vorhanden ist, welches mit einem konstanten Volumenstrom arbeitet. Auf diese Weise lässt sich eine konstante Antriebsdrehzahl des Hydraulikmotors realisieren, welche auf den Kurbeltrieb übertragen wird, um den zumindest einen Absaugarm anzutreiben.

Alternativ kann zum Antreiben zumindest eines Absaugarmes zumindest ein alternierend betätigter Hydraulikzylinder vorgesehen sein, der an einem Hebelarm einer den Absaugarm aufnehmenden Absaugaufnahme angreift. Diese Antriebsvariante ist besonders dann vorteilhaft, wenn für einen hydraulischen Antrieb ein Hydrauliksystem gegeben ist, welches mit einem konstanten Hydraulikdruck arbeitet. Durch alternierendes Ein- und Ausfahren des Hydraulikzylinders wird durch den Hebelarm eine translatorische Bewegung auf die Absaugaufnahme übertragen, welche zu einer Schwenkbewegung des Absaugarmes um die Achse führt. Bei dieser Ausführungsform kann der Kurbeltrieb entfallen.

Weiterhin kann jeder Absaugarm mit jeweils einem Absaugkanal verbunden sein, die in ein Gehäuse eines, insbesondere gemeinsamen, Absauggebläses der Reinigungsvorrichtung münden.

Hierbei kann der jeweilige Absaugarm einen zylindrischen Austrittsbereich aufweisen, der im Wesentlichen koaxial zu der Achse der jeweiligen Lagerstelle angeordnet ist. Der zylindrische Austrittsbereich kann den Absaugkanal aufnehmen, wobei es zwischen dem Austrittsbereich des Absaugarmes und dem Absaugkanal wegen der im Wesentlichen koaxialen Anordnung zu der Achse der jeweiligen Lagerstelle nur zu einer Drehung als Relativbewegung kommt.

Bevorzugt kann die Oberfläche des Kühlerkorbes im Wesentlichen quaderförmig ausgebildet sein. Gegenüber einer kreisrunden bzw. kreiszylindrischen Form der Oberfläche lässt sich eine größere Nutzfläche darstellen, durch die Luft angesaugt werden kann. Zudem stellt die quaderförmige Ausgestaltung der Oberfläche des Kühlerkorbes eine Anpassung an eine dem Kühlerkorb nachgeordnete Kühlvorrichtung dar.

Weiterhin wird die eingangs gestellte Aufgabe durch eine selbstfahrende Erntemaschine, insbesondere einen Mähdrescher oder einen Feldhäcksler, mit einem Verbrennungsmotor sowie einem Hydrauliksystem gelöst, wobei dem Verbrennungsmotor eine Kühlvorrichtung mit einem Kühlerkorb zugeordnet ist, der nach einem der vorangehenden Ansprüche ausgeführt ist.

Dabei können die Oberfläche des Kühlerkorbes und die Reinigungsvorrichtung an einem gemeinsamen Rahmenbauteil angeordnet sein, welches gegenüber der Kühlvorrichtung verschwenkbar an der Erntemaschine angeordnet ist. Hierdurch ist eine Zugänglichkeit zu der Kühlvorrichtung gegeben, um Wartungsarbeiten durchführen zu können.

Insbesondere kann das Hydrauliksystem der Erntemaschine als Konstantdrucksystem ausgeführt sein, wobei zum Antreiben des zumindest einen Absaugarmes zumindest ein Hydraulikzylinder vorgesehen ist, der alternierend mit Druck beaufschlagbar ist. Die Ansteuerung des zumindest einen Hydraulikzylinders kann bevorzugt zeitgesteuert oder sensorgesteuert erfolgen. Durch das Ein- und Ausfahren des Hydraulikzylinders pendelt der eine Absaugarm um die Achse der Lagerstelle, an der dieser angelenkt ist. Mittels der Koppelstange wird diese Bewegung auf den diagonal gegenüberliegend gelagerten Absaugarm übertragen.

Alternativ das Hydrauliksystem mit einem konstanten Volumenstrom arbeitet, wobei zum Antreiben des zumindest einen Absaugarmes zumindest ein Hydraulikmotor vorgesehen ist. Der konstante Volumenstrom gewährleistet eine konstante Drehzahl des zumindest einen Hydraulikmotors und somit der mittels des Kurbeltriebs auf den Absaugarm übertragenen Schwenk- oder Pendelbewegung.

Im Bereich der jeweiligen Lagerstelle sind mehrere Funktionen der Absaugarme vereint. So erfolgt im Bereich der Lagerstelle die Aufnahme der Welle, an der die Absaugarme drehfest angeordnet sind. Weiterhin dient der Bereich der Aufnahme der Absaugdüse und des Abweiselementes. Zudem ist in diesem Bereich eine Absaugarmaufnahme für die Aufnahme unter anderem der Pleuelstange des Kurbeltriebes bzw. der Koppelstange angeordnet. Die Absaugarmaufnahme nimmt zudem die Absaugdüse und das Abschirmelement auf. Darüber hinaus bildet die Absaugarmaufnahme einen Antriebshebel für die Anlenkung der Koppelstange aus.

Die vorliegende Erfindung wird nachstehend anhand von in den Zeichnungen dargestellten Ausführungsbeispielen näher erläutert.

Es zeigen:
- Fig. 1: eine schematische Teilansicht einer landwirtschaftlichen Erntemaschine;
- Fig. 2: eine perspektivische Ansicht einer Kühlvorrichtung sowie eines Kühlerkorbes mit einer Reinigungsvorrichtung;
- Fig. 3: eine perspektivische Teilansicht eines unmittelbar angetriebenen Absaugarmes der Reinigungsvorrichtung gemäß Fig. 2;
- Fig. 4: eine perspektivische Teilansicht eines mittelbar angetriebenen Absaugarmes der Reinigungsvorrichtung gemäß Fig. 2;
- Fig. 5: eine Teilschnittansicht eines Absaugarmes des Kühlerkorbes gemäß Fig. 4;
- Fig. 6: eine Teilschnittansicht eines Gehäuses eines Absauggebläses der Reinigungsvorrichtung des Kühlerkorbes gemäß Fig. 2;
- Fig. 7: eine perspektivische Ansicht der Kühlvorrichtung und des Kühlerkorbes gemäß Fig. 2 in einer Wartungsposition;
- Fig. 8: eine perspektivische Ansicht des Kühlerkorbes gemäß einer zweiten Ausführungsform.

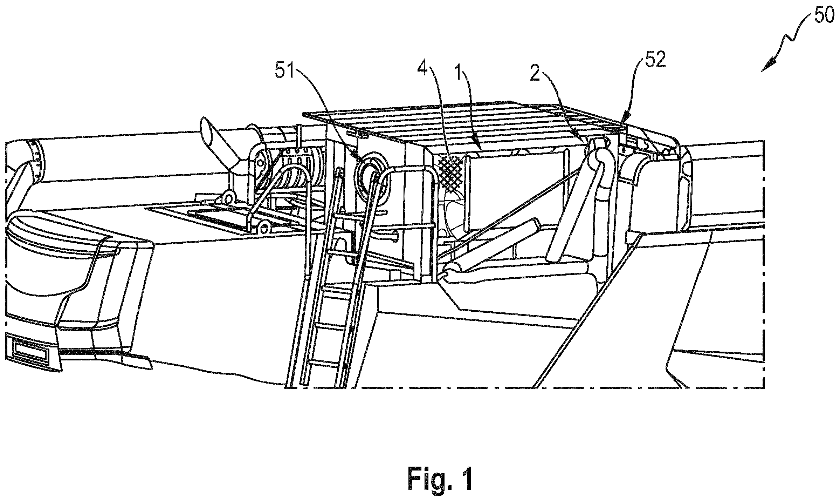

In Fig. 1 ist eine schematische Teilansicht einer selbstfahrenden Erntemaschine 50, die im dargestellten Ausführungsbeispiel als ein Mähdrescher ausgeführt ist, gezeigt. Die Erntemaschine 50 umfasst eine Brennkraftmaschine 51 sowie eine Kühlvorrichtung 52. Die Brennkraftmaschine 51 wird durch die Kühlvorrichtung 52 gekühlt, welche zu diesem Zweck Umgebungsluft durch einen mit einer siebartigen Oberfläche 4 versehenen Kühlerkorb 1 ansaugt. Zur Entfernung von Partikeln, die sich auf der Oberfläche 4 des Kühlerkorbes 1 ablagern, ist eine Reinigungsvorrichtung 2 vorgesehen. Der Kühlerkorb 1 und die an diesem angeordnete Reinigungsvorrichtung 2 werden nachfolgen im Detail beschrieben.

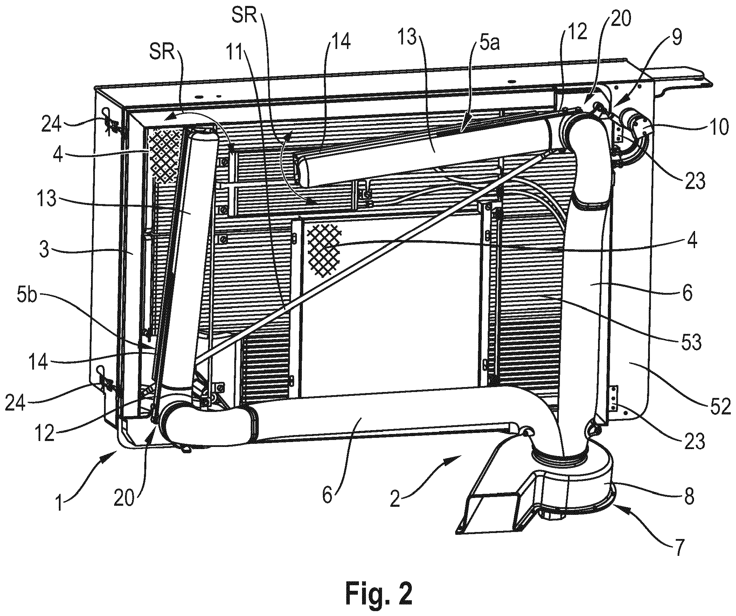

Die Darstellung in Fig. 2 zeigt eine perspektivische Ansicht der Kühlvorrichtung 52 sowie des Kühlerkorbes 1 mit der Reinigungsvorrichtung 2. Der Kühlerkorb 1 ist im Wesentlichen quaderförmig ausgeführt und umfasst ein eine korrespondiere Form aufweisendes Rahmenbauteil 3, in welchem die siebartige Oberfläche 4 aufgespannt ist. Die Oberfläche 4 kann als Sieb oder Gitter ausgeführt sein. Die Oberfläche 4 ist planar ausgeführt. Dabei können die Lochgröße, die Lochanzahl, die Lochform, die Position, die Ausrichtung sowie die Größe des Gitters bzw. Siebes relativ frei gewählt werden. Durch eine sehr feine Lochung und eine sehr große Gitterfläche, kann das Aufbauen einer Matte aus Partikeln verlangsamt und das Verschmutzen von der Oberfläche 4 nachgeordneten Kühllamellen 53 der Kühlvorrichtung 52 reduziert werden.

Die an dem Kühlerkorb 1 angeordnete Reinigungsvorrichtung 2 ist als eine sich zyklisch über die Oberfläche 4 des Kühlerkorbes 1 bewegende Absaugvorrichtung ausgebildet. Die Absaugvorrichtung umfasst zwei Absaugarme 5a, 5b, welche durch jeweils einen Absaugkanal 6 mit einem gemeinsamen Absauggebläse 7 verbunden sind. Die Absaugkanäle 6 sind an dem Rahmenbauteil 3 des Kühlerkorbes 1 angeordnet. Das Absauggebläse 7 weist ein Gehäuse 8 auf, in welchem ein Rotor 28 angeordnet ist. Das Absauggebläse 7 ist am Maschinengehäuse der Erntemaschine 50 oder der Kühlvorrichtung 52 ortsfest angeordnet. Hierdurch wird die statische Anbindung des Absauggebläses 7, die hydraulische Leitungsführung für dessen Antrieb sowie die Anordnung benachbarter Verkleidungsteile vereinfacht.

Die Absaugarme 5a, 5b sind jeweils mittels innerhalb des Kühlerkorbes 1 diagonal gegenüberliegend positionierter Lagerstellen 20 um eine zu der Oberfläche 4 vertikal orientierte Achse 19 schwenkbar gelagert. Insbesondere sind die Lagerstellen 20 in dem Rahmenbauteil 3 angeordnet. Hierfür können Eckelemente des Rahmenbauteils 3 als Gussteile ausgeführt sein, welche zur Aufnahme der Lagerstellen 20 eingerichtet sind.

Zum Antreiben der Absaugarme 5a, 5b ist einem der Absaugarme 5a ein Kurbeltrieb 9 zugeordnet, der von einem Motor 10, der als Hydraulikmotor oder als Elektromotor ausgeführt sein kann, angetrieben wird. Durch den Kurbeltrieb 9 wird der eine Absaugarm 5a unmittelbar angetrieben und in einer Schwenkrichtung SR über die Oberfläche 4 bewegt. Der andere Absaugarm 5b ist durch eine Koppelstange 11 trieblich mit dem unmittelbar angetriebenen Absaugarm 5a gekoppelt. Die Koppelstange 11 überträgt die Schwenkbewegung des einen Absaugarmes 5a auf den anderen Absaugarm 5b, so dass auch dieser in einer Schwenkrichtung SR bewegt wird. Wie aus der Darstellung in Fig. 2 ersichtlich, ist die Koppelstange 11 hinter der siebartigen Oberfläche 4 angeordnet. Dadurch wird vermieden, dass die Absaugarme 5a, 5b, die in ihrer Bewegung die Koppelstange 11 kreuzen müssen, mit dieser kollidieren. Die Anordnung der Koppelstange 11 erfolgt in einer Ebene hinter den Abweiselementen 14 und vor den Kühllamellen 53. Die Absaugarme 5a, 5b sind in einer Ruheposition, in der die Absaugvorrichtung inaktiv ist, zueinander benachbart positioniert. Das heißt, dass die freien Enden der Absaugarme 5a, 5b in der Ruheposition einander zugewandt sind.

Jeder Absaugarm 5a, 5b umfasst ein Halteelement 12, welches insbesondere als ein mittels Laserschneidtechnik hergestelltes Blechteil ausgeführt ist, an welchem eine Absaugdüse 13 angeordnet ist. Die Absaugdüse 13 ist bevorzugt als ein aus Kunststoff gefertigtes Rotationsteil ausgeführt. Die Absaugdüse 13 weist einen länglichen Eintrittsbereich 13a, welcher der planaren Oberfläche 4 zugewandt ist, und einen der Oberfläche 4 abgewandten zylindrischen Austrittsbereich 13b auf. Dem Eintrittsbereich 13a der Absaugdüse 13 gegenüberliegend ist ein flächiges Abschirmelement 14 angeordnet, wobei sich zwischen der Absaugdüse 13 und dem Abschirmelement 14 die siebartige Oberfläche 4 befindet.

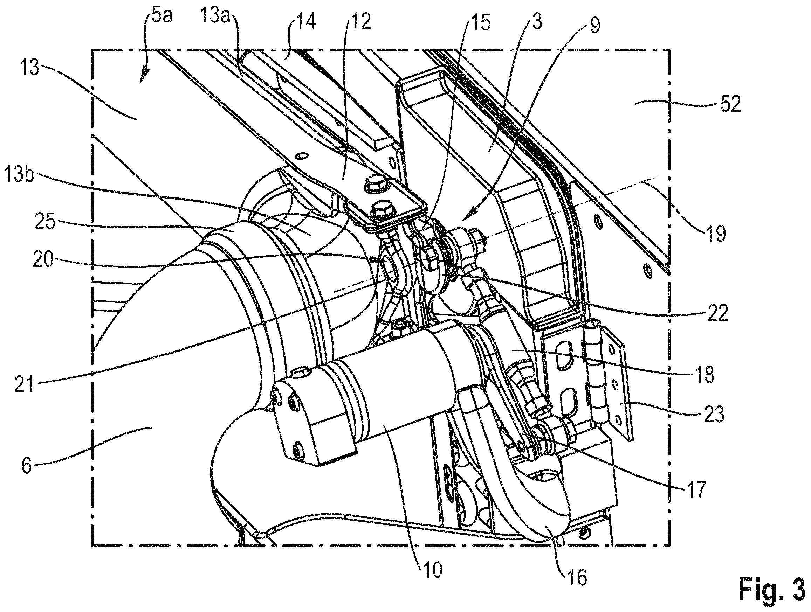

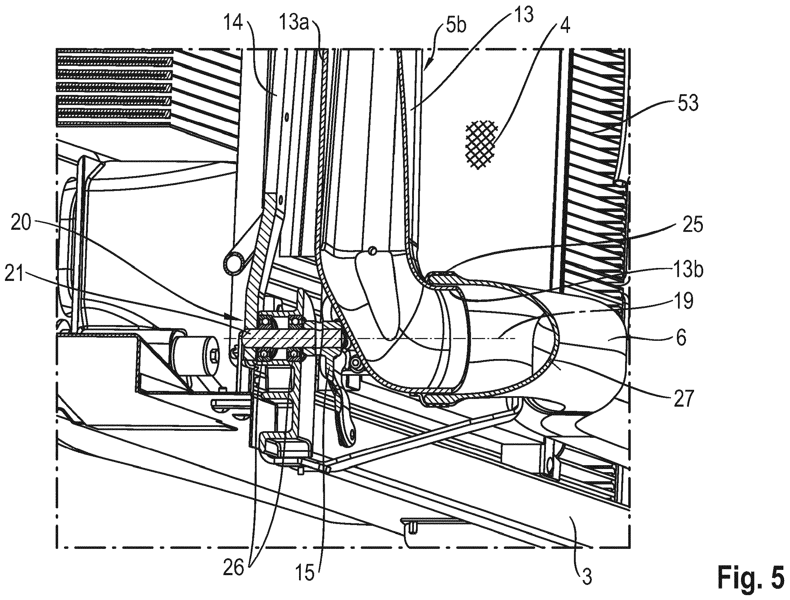

In Fig. 3 ist eine perspektivische Teilansicht des unmittelbar durch den Kurbeltrieb 9 angetriebenen Absaugarmes 5a der Reinigungsvorrichtung 2 gemäß Fig. 2 dargestellt. Das Halteelement 12 und das Abschirmelement 14 sind an einer Absaugarmaufnahme 15 angeordnet, welche um eine Welle 21 der Lagerstelle 20 drehbar gelagert ist. Die Welle 21 ist in dem Rahmenbauteil 3 drehbar gelagert angeordnet. Hierzu ist ein Paar Wälzlager 26 in dem Rahmenbauteil 3 angeordnet. Die Längsachse der Welle 21 bildet die Achse 19, um welche der Absaugarm 5a schwenkbar ist. Dabei erfolgt die Anordnung der Absaugdüse 13 des Absaugarmes 5a derart, dass der zylindrische Austrittsbereich 13b zumindest nahezu koaxial zu der Längsachse der Welle 21 respektive der Achse 19 ausgerichtet ist. Entsprechendes gilt für die Anordnung der Absaugdüse 13 des Absaugarmes 5b, wie aus der Darstellung in Fig. 5 ersichtlich ist. Der Eintrittsbereich 13a der Absaugdüse 13 erstreckt sich im Wesentlichen parallel zu der Oberfläche 4.

Der Motor 10 zum Antreiben des Absaugarmes 5a ist an einem freien Ende eines gekröpften Armes 16 befestigt, welcher mit seinem anderen Ende mit dem Rahmenbauteil 3 der Kühlerkorbes 1 verbunden ist. Der Kurbeltrieb 9 umfasst eine Kurbelwelle 17 sowie einen Pleuel 18. An dem Rotor des Motors 10 ist die Kurbelwelle 17 angeordnet, welche die von dem Motor 10 hervorgerufene Rotationsbewegung auf den Pleuel 18 überträgt. Der Pleuel 18 greift an einem Hebelarm 22 der Absaugarmaufnahme 15 an. Mittels des Kurbeltriebes 9 wird ein sinusförmiger Bewegungsablauf auf den Absaugarm 5a übertragen. Der Absaugarm 5a wird somit um die Achse 19 verschwenkt und überstreicht dabei eine etwa kreissegmentförmige Fläche. Die kreissegmentförmige Fläche kann etwa einem Viertelkreis entsprechen.

Durch die Koppelstange 11 wird die sinusförmige Bewegung synchron auf den diagonal gegenüberliegend angeordneten Absaugarm 5b übertragen. Dabei sorgt die Anordnung der Absaugarme 5a, 5b über Kreuz für eine gegenläufige Bewegung der Absaugarme 5a, 5b, so dass es trotz einer Überlappung der durch die Absaugarme 5a, 5b überstrichenen Oberfläche 4 nicht zu einer Kollision kommen kann. Der durch die Koppelstange 11 mittelbar angetriebene Absaugarm 5b überstreicht dabei ebenfalls eine etwa kreissegmentförmige, insbesondere viertelkreisförmige, Fläche. Durch Festlegung eines entsprechenden Seitenverhältnisses der quaderförmigen Oberfläche 4 des Kühlerkorbes 1 und den eingesetzten Kurbeltrieb 9 können diese beiden kreissegmentförmige Flächen soweit ineinander verschachtelt werden, dass die von den beiden Absaugarmen 5a, 5b überstrichene Fläche bei rund 94% der Gesamtfläche der siebartigen Oberfläche 4 liegt und die Absaugarme 5a, 5b dabei kollisionsfrei bewegt werden können.

Das Rahmenbauteil 3 des Kühlerkorbes 1 ist mittels Scharnieren 23 schwenkbar an der Kühlvorrichtung 52 angeordnet. Die Scharniere 23 sind an einer kurzen Seite des quaderförmigen Rahmenbautriels 3 angeordnet. Zur lösbaren Arretierung des Kühlerkorbes 1 sind auf der den Scharnieren 23 gegenüberliegenden Seite des Rahmenbauteils 3 Arretiermittel 24 vorgesehen. Die Arretiermittel 24 können beispielsweise als Schnellspannverschlüsse ausgebildet sein. Dadurch wird die Zugänglichkeit zu der Kühlvorrichtung 52 gewährleistet, indem der Kühlerkorb 1 und die daran angeordneten Komponenten der Reinigungsvorrichtung 2 gegenüber der Kühlvorrichtung 52 ausschwenkbar sind.

Der Übergangsbereich zwischen dem Austrittsbereich 13b der Absaugdüse 13 und dem Absaugkanal 6 wird durch eine Dichtmanschette 25 abgedichtet. Dies wird dadurch ermöglicht, dass der Absaugarm 5a im Austrittsbereich 13b eine reine Drehbewegung um die Achse 19 ausführt. Der sich an den Austrittsbereich 13b anschließende Absaugkanal 6 ist unabhängig von der Absaugarm 5a an dem Rahmenbauteil 3 befestigt. Der Übergang zwischen dem Austrittsbereich 13b des sich drehenden Absaugarm 5a und dem ortsfestem Absaugkanal 6 muss deshalb lediglich eine abdichtende Funktion erfüllen, was durch die als Gummimanschette ausgebildete Dichtmanschette 25 realisiert wird.

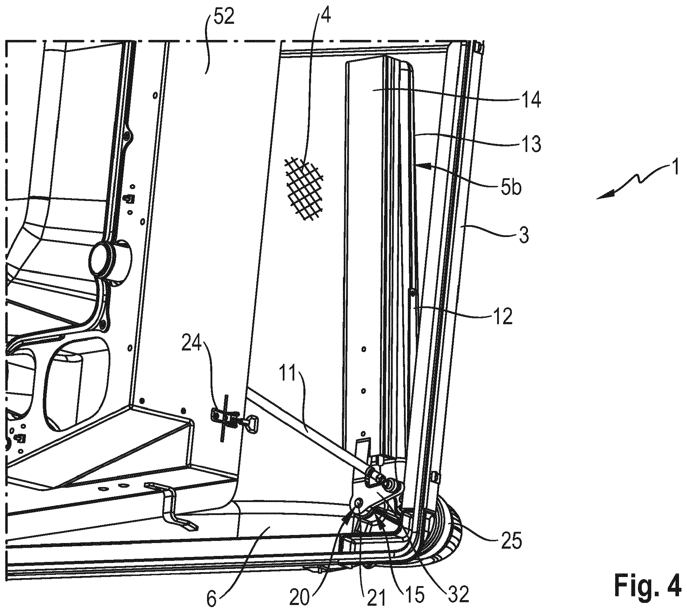

Die Darstellung in Fig. 4 zeigt eine perspektivische Teilansicht des mittelbar angetriebenen Absaugarmes 5b der Reinigungsvorrichtung 2 des Kühlerkorbes 1 gemäß Fig. 2. Der durch die Koppelstange 11 mittelbar angetriebene Absaugarm 5b ist in der diagonal gegenüberliegenden Lagerstelle 20 des unmittelbar angetriebenen Absaugarmes 5a schwenkbar gelagert, wobei die Lagerstelle 20 innerhalb der Oberfläche 4 des Kühlerkorbes 1 positioniert ist. Der Kühlerkorb 1 ist dabei in einer gegenüber der Kühlvorrichtung 52 ausgeschwenkten Position dargestellt. Die Absaugarmaufnahme 15 des Absaugarmes 5b weist eine im Wesentlichen L-förmige Form mit zwei Schenkeln auf. An dem einen Schenkel der Absaugarmaufnahme 15, der unter einem Winkel zur Längsachse des Absaugarmes 5b geneigt und als Hebelarm 32 ausgebildet ist, greift die Koppelstange 11 an, während an dem andren Schenkel, der sich im Wesentlichen parallel zu Längsachse des Absaugarmes 5b erstreckt, Teile des Absaugarmes 5b befestigt sind. Wie bei dem Absaugarm 5a auch ist die Absaugdüse 13 mittels des Halteelementes 12 an der Absaugarmaufnahme 15 angeordnet, während das der Absaugdüse 13 gegenüberliegende Abschirmelement 14 unmittelbar an der Absaugarmaufnahme 15 angeordnet ist.

Die jeweilige Absaugarmaufnahme 15 der Absaugarme 5a, 5b ist bevorzugt als ein Gussteil ausgeführt. Die als Gussteil ausgeführten Absaugarmaufnahmen 15 zeichnen sich durch eine kompakte Ausführung und deshalb durch ein geringes Gewicht aus. Die Absaugdüse 13 der Absaugarme 5a, 5b sind für eine größtmögliche Abdeckung der Oberfläche 4 weit ausladend ausgeführt. Um die jeweilige Absaugdüse 13 an der jeweiligen kompakt ausgeführten Absaugarmaufnahme 15 anzubinden, sind diese durch die Halteelemente 12 aufgenommen. Die Halteelemente 12 werden von einer Nut in den Absaugarmaufnahme 15 exakt aufgenommen und an diesen mittels einer Schraubverbindung befestigt. Dabei wird das jeweilige Halteelement 12 vertikal zur Oberfläche 4 ausgerichtet an der Absaugarmaufnahme 15 befestigt. Aufgrund der Ausrichtung vertikal zur Oberfläche 4 kann das jeweilige Halteelement 12 elastisch an die aus Kunststoff bestehende Absaugdüse 13 herangezogen werden und deren Breitentoleranz ausgleichen. Wegen der Anordnung normal zu der siebartigen Oberfläche 4 besitzen die Halteelemente 12 eine hohe Steifigkeit. Somit können die Halteelemente 12 können mit zunehmendem Abstand zu der jeweiligen Lagerstelle 20 schlanker ausgeführt werden. Die Absaugdüsen 13 können somit von den Halteelementen 12 mit einer breiten Basis aufgenommen und von statischen Kräften freigestellt werden. Auch in radialer Richtung zu der jeweiligen Lagerstelle 20 ist ein Toleranzausgleich der Absaugdüsen 13 durch Halteelemente 12 möglich.

In Fig. 5 ist eine Teilschnittansicht des Absaugarmes 5b des Kühlerkorbes 1 gemäß Fig. 4 dargestellt. Der Absaugarm 5b ist mit der drehbar gelagerten Welle 21 um die ortsfeste Achse 19 in der Lagerstelle 20 schwenkbar. Dazu ist die Welle 21 mittels des Paares Wälzlager 26 drehbar gelagert. Die Absaugarmaufnahme 15 des Absaugarmes 5b ist drehfest an der Welle 21 angeordnet. Der zylindrische Austrittsbereich 13b der Absaugdüse 13, der in den Absaugkanal 6 übergeht ist durch die Dichtmanschette 25 abgedichtet. Die Teilschnittansicht gemäß Fig. 5 veranschaulicht noch einmal die Anordnung des Absaugarmes 5b respektive der Absaugdüse 13 und des Abschirmelementes, welcher um die Achse 19 schwenkbar ist, die mit der Längsachse der Welle 21 zusammenfällt.

Da lediglich der Bereich der die jeweilige Welle 21 aufnehmenden Wälzlager 26 der Lagerstellen 20 auf der Innenseite und der Außenseite der siebartigen Oberfläche 4 abgedichtet werden muss und die Lagerstellen 20 ortsfest sind, wird der Aufwand der hierfür notwendigen Abdichtung minimiert.

Die Absaugkanäle 6, die mit dem jeweiligen Austrittsbereich 13b der Absaugarme 5a, 5b verbunden sind, sind innenseitig mit einer glatten Mantelfläche 27 ausgeführt und weisen einen von Knicken oder scharfen Kanten freien Verlauf auf. Die Absaugkanäle 6 sind wie die Absaugdüsen 13 als aus Kunststoff gefertigte Rotationsteile ausgeführt. Durch die glattwandige Ausführung der innenseitigen Mantelfläche 27 und den strömungsoptimierten Verlauf der Absaugkanäle 6 wird dem Auftreten von Ablagerungen im Inneren der Absaugkanäle 6 begegnet.

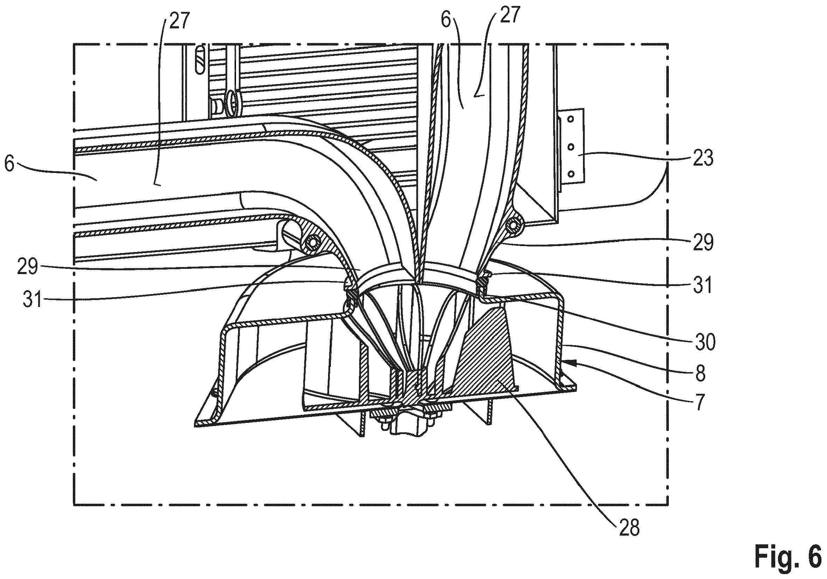

In Fig. 6 ist eine Teilschnittansicht des Gehäuses 8 des Absauggebläses 7 der Reinigungsvorrichtung 2 des Kühlerkorbes 1 gemäß Fig. 2 dargestellt. Wie bereits ausgeführt sind die Absaugkanäle 6 an dem Rahmenbauteil 3 angeordnet, während das Absauggebläse 7 am Maschinenrahmen der Erntemaschine 50 unterhalb des Kühlerkorbes 1 ortsfest angebracht ist. Der Abstand zwischen dem Absauggebläse 7 und dem Rahmenbauteil 3 ist dabei möglichst gering gewählt. Die Absaugkanäle 6 weisen jeweils einen Endabschnitt 29 auf, die gemeinsam in einen Anschlussabschnitt 30 des Gehäuses 8 einmünden. Die beiden Endabschnitte 29 der Absaugkanäle 6 bilden dabei an ihrer äußeren Umfangsfläche einen einzelnen flanschförmigen Anschluss 31 aus, der gegenüber dem korrespondierend ausgebildeten Anschlussabschnitt 30 des Gehäuses 8 positionierbar ist. Der flanschförmige Anschluss 31 der Absaugkanäle 6 und der Anschlussabschnitt 30 des Gehäuses 8 bilden eine Trennstelle. Aufgrund der Anordnung des Absauggebläses 7 unterhalb des Kühlerkorbes 1 mit geringstmöglicher Beabstandung zum Rahmenbauteil 3 sind die zu überbrückenden Distanzen zwischen den Austrittsöffnungen 13b der Absaugdüsen 13 und dem Anschlussabschnitt 30 des Gehäuses 8 gering. Zudem wird der Guttransport durch die Schwerkraft unterstützt.

Die Endabschnitte 29 der beiden Absaugkanäle 6 münden mit einer Querschnittsverjüngung in das Gehäuse 8 ein. Dabei kann das Querschnittsverhältnis der Absaugkanäle 6 in diesem Bereich in Relation zur Länge des jeweiligen Absaugkanals 6 stehen. Hierdurch kann ein nahezu gleichmäßiger Unterdruck in den beiden Absaugkanälen 6 aufgebaut werden.

Durch die Verwendung zweier Absaugdüsen 13, die durch jeweils einen Absaugkanal 6 mit dem nur einen Absauggebläse 7 verbunden sind, erfolgt zwangsläufig die Zusammenführung von zwei Teilvolumenströmen. Diese Zusammenführung birgt zum einen eine Verstopfungsgefahr in dem Zusammenführungspunkt und zum anderen das Problem, dass der vom Absauggebläse 7 erzeugte Unterdruck gleichmäßig auf beide Absaugdüsen 13 und Absaugkanäle 6 einwirken muss. Deshalb wurde die Zusammenführung direkt vor den Rotor 28 des Absauggebläses 7 in den Entstehungspunkt des Unterdruckes gelegt. Hierdurch wird das Risiko für Verstopfungen durch die in den Teilvolumenströmen enthaltenen Partikel im Zusammenführungspunkt und eine Einwirkung unterschiedlicher Unterdrücke auf die beiden Absaugkanäle 6 bzw. die Absaugdüsen 13 minimiert.

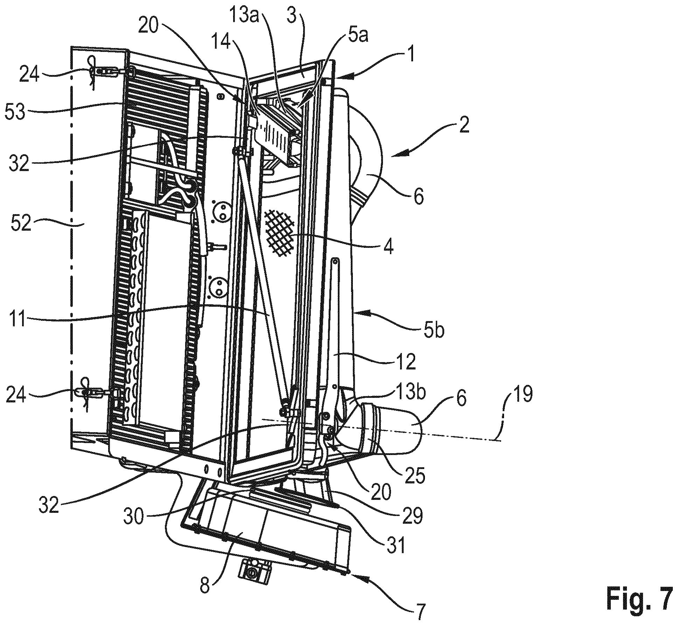

Die Darstellung in Fig. 7 zeigt eine perspektivische Ansicht der Kühlvorrichtung 52 und des Kühlerkorbes 1 gemäß Fig. 2 in einer Wartungsposition. Durch das Öffnen der Arretiermittel 24 lässt sich der Kühlerkorb 1 mitsamt der Reinigungsvorrichtung 2 verschwenken, so dass der hinter dem Kühlerkorb 1 liegende Bereich der Kühlvorrichtung 52 zugänglich ist. Während die Absaugkanäle 6 mit dem Kühlerkorb 1 verschwenkt werden, ist das ortsfeste Gehäuse 8 des Absauggebläses 7 in einer zur Vertikalen geneigten Position an der Kühlvorrichtung 52 bzw. dem Maschinengehäuse der Erntemaschine 50 befestigt. Dabei fällt das Gehäuse 8 schräg nach unten ab. Durch eine abgeschrägte Ausgestaltung des gemeinsamen flanschförmigen Anschlusses 31 der beiden Absaugkanäle 6 lässt sich beim Schließen des Kühlerkorbes 1 eine selbstdichtende Anordnung erreichen, da der flanschförmige Anschluss 31 wie auf einer Rampe auf den Anschlussabschnitt 30 aufgeschoben werden kann. Die Trennstelle dient nicht nur dem Öffnen und Schließen des Kühlerkorbes 1, sondern ermöglicht auch eine Verstopfungsbeseitigung unmittelbar an dem Absauggebläse 7.

Weiterhin ist aus der Darstellung in Fig. 7 ersichtlich, wie die Koppelstange 11 an der jeweiligen Absaugarmaufnahme 15 der Absaugarme 5a, 5b angeordnet ist. Die Absaugaufnahmen 15 weisen jeweils den nach innen gekröpften Hebelarm 32 auf, an deren freien Enden die Koppelstange 11 angeordnet ist, die die Absaugarme 5a, 5b trieblich miteinander verbindet.

Selbstfahrende Erntemaschinen weisen in der Regel ein Hydrauliksystem auf, welches dem Antrieb von verschiedenen Arbeitsaggregaten dient. Im Fall der als Mähdrescher ausgeführten Erntemaschine 50 ist das Hydrauliksystem als Konstantdrucksystem ausgebildet. Alternativ kann das Hydrauliksystem der Erntemaschine mit einem konstanten Volumenstrom arbeiten.

Dabei können, je nach Ausgestaltung des Hydrauliksystems, unterschiedliche Antriebsmittel zum Schwenken des unmittelbar angetriebenen Absaugarmes 5a und des mit diesem trieblich verbundenen Absaugarmes 5b zur Anwendung kommen. Im Fall des mit einem konstanten Volumenstrom arbeitenden Hydrauliksystems ist es vorteilhafter, den zumindest einen Motor 10 als Hydraulikmotor auszubilden, wie weiter oben bereits ausgeführt wurde. Der als Hydraulikmotor ausgeführte Motor 10 treibt den Kurbeltrieb 9 an.

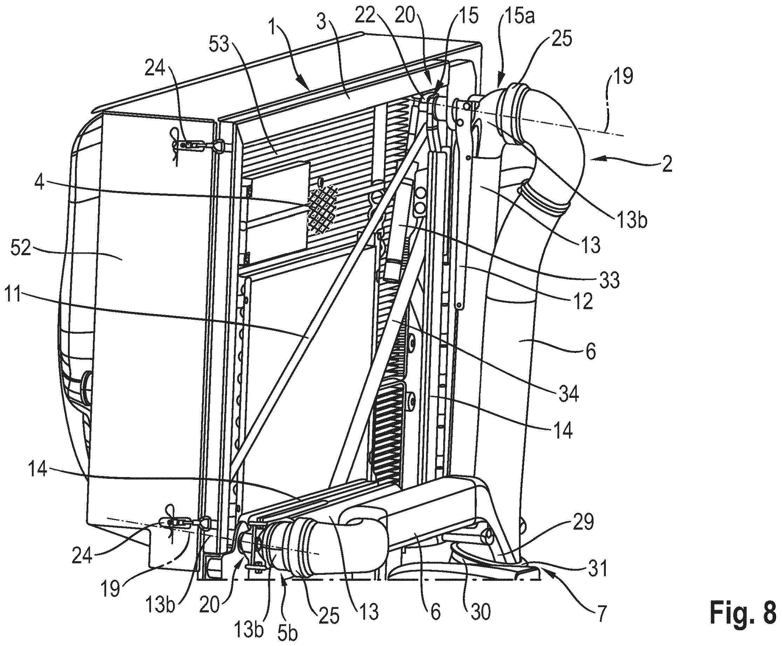

Handelt es sich bei dem Hydrauliksystem der Erntemaschine 50 hingegen um ein Konstantdrucksystem, so bietet sich als Antrieb des unmittelbar angetriebenen Absaugarmes 5a zumindest ein Hydraulikzylinder an. In Fig. 8 ist eine perspektivische Ansicht des Kühlerkorbes 1 gemäß einer zweiten Ausführungsform dargestellt, bei welcher zum Antrieb der Reinigungsvorrichtung 2 zumindest ein Hydraulikzylinder 33 zum Einsatz kommt. Die zweite Ausführungsform des Kühlerkorbes 1 und der Reinigungsvorrichtung 2 unterscheidet sich von der vorangehend beschriebenen Ausführungsform lediglich durch das Antriebsmittel des unmittelbar angetriebenen Absaugarmes 5a. Der zumindest eine Hydraulikzylinder 33, der dem Antrieb des Absaugarmes 5a dient, ist hierzu mit einem Ende an einer Halterung 34 angelenkt, die an dem Rahmenbauteil 3 des Kühlerkorbes 1 angeordnet ist. Mit seinem anderen Ende ist der Hydraulikzylinder 33 an dem Hebelarm 22 der Absaugaufnahme 15 des unmittelbar angetriebenen Absaugarmes 5a angelenkt. Bei dieser Ausführungsform entfallen der Motor 10 und Kurbeltrieb 9. Durch eine alternierende Druckbeaufschlagung lässt sich eine translatorische Bewegung des Hydraulikzylinders 33 hervorrufen, welche auf den Hebelarm 22 übertragen wird, um den Absaugarm 5a, das heißt die Absaugdüse 13 und das Abschirmelement 14, um die Achse 19 zu verschwenken. Die alternierende Druckbeaufschlagung lässt sich zeitgesteuert oder sensorgesteuert realisieren. Bevorzugt liegt der zumindest eine Hydraulikzylinder 33 - wie die Koppelstange 11 auch - in einer Ebene hinter der siebartigen Oberfläche 4 des Kühlerkorbes 1 und vor den Kühllamellen 53. Der andere Absaugarm 5b wird, wie im Zusammenhang mit der ersten Ausführungsform weiter oben bereits beschrieben, durch die Koppelstange 11 mittelbar angetrieben.

**Bezugszeichenliste**

| | | | |
|---|---|---|---|
| 1 | Kühlerkorb | 28 | Rotor |
| 2 | Reinigungsvorrichtung | 29 | Endabschnitt |
| 3 | Rahmenbauteil | 30 | Anschlussabschnitt |
| 4 | Oberfläche | 31 | Flanschförmiger Anschluss |
| 5a | Absaugarm | 32 | Hebelarm |
| 5b | Absaugarm | 33 | Hydraulikzylinder |
| 6 | Absaugkanal | 34 | Halterung |
| 7 | Absauggebläse | 50 | Erntemaschine |
| 8 | Gehäuse | 51 | Brennkraftmaschine |
| 9 | Kurbeltrieb | 52 | Kühlvorrichtung |
| 10 | Motor | 53 | Kühllamelle |
| 11 | Koppelstange | | |
| 12 | Halteelement | SR | Schwenkrichtung |
| 13 | Absaugdüse | | |
| 13a | Eintrittsbereich | | |
| 13b | Austrittsbereich | | |
| 14 | Abschirmelement | | |
| 15 | Absaugaufnahme | | |
| 16 | Gekröpfter Arm | | |
| 17 | Kurbelwelle | | |
| 18 | Pleuel | | |
| 19 | Achse | | |
| 20 | Lagerstelle | | |
| 21 | Welle | | |
| 22 | Hebelarm | | |
| 23 | Scharnier | | |
| 24 | Arretiermittel | | |
| 25 | Dichtmanschette | | |
| 26 | Wälzlager | | |
| 27 | Mantelfläche | | |

## Patentansprüche

1. Kühlerkorb (1) mit einer Reinigungsvorrichtung (2), wobei der Kühlerkorb (1) ein Rahmenbauteil (3) aufweist, innerhalb dessen eine siebartige Oberfläche (4) ausgebildet ist, und die Reinigungsvorrichtung (2) als eine sich zyklisch über die Oberfläche (4) des Kühlerkorbes (1) bewegende Absaugvorrichtung ausgebildet ist, welche sich auf der Oberfläche (4) ablagernde Partikel aufnimmt, **dadurch gekennzeichnet, dass** die Absaugvorrichtung zwei Absaugarme (5a, 5b) umfasst, die mittels innerhalb des Kühlerkorbes (1) diagonal gegenüberliegend positionierter Lagerstellen (20) um eine zu der Oberfläche (4) vertikal orientierte Achse (19) schwenkbar gelagert sind.

2. Kühlerkorb (1) nach Anspruch 1, **dadurch gekennzeichnet, dass** die Absaugarme (5a, 5b) in einer Ruheposition, in der die Absaugvorrichtung inaktiv ist, zueinander benachbart positioniert sind.

3. Kühlerkorb (1) nach Anspruch 1 oder 2, **dadurch gekennzeichnet, dass** die Absaugarme (5a, 5b) jeweils um einen Winkel von zumindest 85° verschwenkbar sind.

4. Kühlerkorb (1) nach einem der vorangehenden Ansprüche, **dadurch gekennzeichnet, dass** die Absaugarme (5a, 5b) jeweils eine Absaugdüse (13) und ein Abschirmelement (14) aufweisen, welche parallel zueinander an der jeweiligen Lagerstelle (20) angeordnet sind, wobei sich die Oberfläche (4) des Kühlerkorbes (1) zwischen der Absaugdüse (13) und dem Abschirmelement (14) befindet.

5. Kühlerkorb (1) nach einem der vorangehenden Ansprüche, **dadurch gekennzeichnet, dass** zum Antreiben des einen Absaugarmes (5a) ein Kurbeltrieb (9) im Bereich der Lagerstelle (20) des Absaugarmes (5a) vorgesehen ist.

6. Kühlerkorb (1) nach Anspruch 5, **dadurch gekennzeichnet, dass** der andere Absaugarm (5b) trieblich mit dem angetriebenen Absaugarm (5a) gekoppelt ist.

7. Kühlerkorb (1) nach Anspruch 6, **dadurch gekennzeichnet, dass** die triebliche Kopplung dazu eingerichtet ist, dass der andere Absaugarm (5b) mittels der trieblichen Kopplung eine gegenläufige Bewegung zu dem mittels des Kurbeltriebes (9) angetriebenen Absaugarm (5a) auszuführt.

8. Kühlerkorb (1) nach Anspruch 6 oder 7, **dadurch gekennzeichnet, dass** die triebliche Kopplung mittels einer Koppelstange (11) erfolgt, die mit einem Ende am Kurbeltrieb (9) und mit ihrem anderen Ende im Bereich der diagonal gegenüberliegenden Lagerstelle (20) an dem anderen Absaugarm (5b) angreift.

9. Kühlerkorb (1) nach einem der vorangehenden Ansprüche, **dadurch gekennzeichnet, dass** die Koppelstange (11) in einer Ebene hinter den Abschirmelementen (14) angeordnet ist.

10. Kühlerkorb (1) nach einem der vorangehenden Ansprüche, **dadurch gekennzeichnet, dass** zum Antreiben zumindest eines Absaugarmes (5a, 5b) ein Motor (19), insbesondere ein Elektromotor oder Hydraulikmotor, vorgesehen ist.

11. Kühlerkorb (1) nach einem der vorangehenden Ansprüche, **dadurch gekennzeichnet, dass** zum Antreiben zumindest eines Absaugarmes (5a, 5b) ein alternierend betätigter Hydraulikzylinder (33) vorgesehen ist, der an einem Hebelarm (22) einer den Absaugarm (5a, 5b) aufnehmenden Absaugaufnahme (15) angreift.

12. Kühlerkorb (1) nach einem der vorangehenden Ansprüche, **dadurch gekennzeichnet, dass** jeder Absaugarm (5a, 5b) mit jeweils einem Absaugkanal (6) verbunden ist, die in ein Gehäuse (8) eines Absauggebläses (7) münden.

13. Kühlerkorb (1) nach einem der vorangehenden Ansprüche, **dadurch gekennzeichnet, dass** der jeweilige Absaugarm (5a, 5b) einen zylindrischen Austrittsbereich (13b) aufweist, der im Wesentlichen koaxial zu der Achse (19) der jeweiligen Lagerstelle (20) angeordnet ist.

14. Kühlerkorb (1) nach einem der vorangehenden Ansprüche, **dadurch gekennzeichnet, dass** die Oberfläche (4) des Kühlerkorbes (1) im Wesentlichen quaderförmig ausgebildet ist.

15. Selbstfahrende Erntemaschine (50), insbesondere Mähdrescher oder Feldhäcksler, mit einer Brennkraftmaschine (51) sowie einem Hydrauliksystem, wobei der Brennkraftmaschine (51) eine Kühlvorrichtung (52) mit einem Kühlerkorb (1) zugeordnet ist, der nach einem der vorangehenden Ansprüche zugeordnet ist.

16. Selbstfahrende Erntemaschine (50) nach Anspruch 15, **dadurch gekennzeichnet, dass** die Oberfläche (4) des Kühlerkorbes (1) und die Reinigungsvorrichtung (2) an einem gemeinsamen Rahmenbauteil (3) des Kühlerkorbes (1) angeordnet sind, welches gegenüber der Kühlvorrichtung (52) verschwenkbar an der Erntemaschine (50) angeordnet ist.

17. Selbstfahrende Erntemaschine (50) nach Anspruch 15 oder 16, **dadurch gekennzeichnet, dass** das Hydrauliksystem der Erntemaschine (50) als Konstantdrucksystem ausgeführt ist, wobei zum Antreiben des zumindest einen Absaugarmes (5a, 5b) zumindest ein Hydraulikzylinder (33)vorgesehen ist, der alternierend mit Druck beaufschlagbar ist.

18. Selbstfahrende Erntemaschine (50) nach Anspruch 15 oder 16, **dadurch gekennzeichnet, dass** das Hydrauliksystem mit einem konstanten Volumenstrom arbeitet, wobei zum Antreiben des zumindest einen Absaugarmes (5a, 5b) zumindest ein Hydraulikmotor (10) vorgesehen ist.

## Claims

1. A radiator screen (1) with a cleaning device (2), wherein the radiator screen (1) has a frame component (3) inside which a sieve-like surface (4) is formed, and the cleaning device (2) is configured as a suction device which moves in a cyclic manner over the surface (4) of the radiator screen (1) and which picks up particles which are deposited on the surface (4), **characterized in that** the suction device has two suction arms (5a, 5b) which are pivotably mounted about an axis (19) which is orientated vertically with respect to the surface (4) by means of diagonally opposed bearings (20) positioned inside the radiator screen (1).

2. The radiator screen (1) according to claim 1, **characterized in that** in a rest position in which the suction device is inactive, the suction arms (5a, 5b) are positioned adjacent to each other.

3. The radiator screen (1) according to claim 1 or claim 2, **characterized in that** the respective suction arms (5a, 5b) are pivotable through an angle of at least 85°.

4. The radiator screen (1) according to one of the preceding claims, **characterized in that** the respective suction arms (5a, 5b) have a suction nozzle (13) and a shield element (14) which are disposed parallel to each other at the respective bearing (20), wherein the surface (4) of the radiator screen (1) is between the suction nozzle (13) and the shield element (14).

5. The radiator screen (1) according to one of the preceding claims, **characterized in that** a crank drive (9) is provided in the region of the bearing (20) of the suction arm (5a) in order to drive one of the suction arms (5a).

6. The radiator screen (1) according to claim 5, **characterized in that** the other suction arm (5b) is operatively coupled to the driven suction arm (5a).

7. The radiator screen (1) according to claim 6, **characterized in that** by means of the operative coupling, the operative coupling is configured such that the other suction arm (5b) executes an opposing motion to that of the suction arm (5a) which is driven by means of the crank drive (9).

8. The radiator screen (1) according to claim 6 or claim 7, **characterized in that** the operative coupling is produced by means of a coupling rod (11), one end thereof engaging with the crank drive (9) and the other end thereof engaging with the other suction arm (5b) in the region of the diagonally opposed bearing (20).

9. The radiator screen (1) according to one of the preceding claims, **characterized in that** the coupling rod (11) is disposed in a plane behind the shield element (14).

10. The radiator screen (1) according to one of the preceding claims, **characterized in that** a motor (19), in particular an electric motor or hydraulic motor, is provided in order to drive at least one suction arm (5a, 5b).

11. The radiator screen (1) according to one of the preceding claims, **characterized in that** an alternating hydraulic cylinder (33) which engages on a lever arm (22) of a suction intake (15) receiving the suction arm (5a, 5b) is provided in order to drive at least one suction arm (5a, 5b).

12. The radiator screen (1) according to one of the preceding claims, **characterized in that** each suction arm (5a, 5b) is connected to a respective suction duct (6) which discharges into a housing (8) of a suction fan (7).

13. The radiator screen (1) according to one of the preceding claims, **characterized in that** the respective suction arm (5a, 5b) has a cylindrical discharge zone (13b) which is disposed substantially coaxially with the axis (19) of the respective bearing (20).

14. The radiator screen (1) according to one of the preceding claims, **characterized in that** the surface (4) of the radiator screen (1) is substantially cuboid in configuration.

15. A self-propelled harvesting machine (50), in particular a combine harvester or forage harvester, having an internal combustion engine (51) as well as a hydraulic system, wherein a radiator device (52) with a radiator screen (1) according to one of the preceding claims is associated with the internal combustion engine (51).

16. The self-propelled harvesting machine (50) according to claim 15, **characterized in that** the surface (4) of the radiator screen (1) and the cleaning device (2) are disposed on a common frame component (3) of the radiator screen (1) which is pivotably mounted with respect to the radiator device (52) on the harvesting machine (50).

17. The self-propelled harvesting machine (50) according to claim 15 or claim 16, **characterized in that** the hydraulic system of the harvesting machine (50) is configured as a constant pressure system, wherein in order to drive the at least one suction arm (5a, 5b), at least one hydraulic cylinder (33) is provided to which pressure can be applied in an alternating manner.

18. The self-propelled harvesting machine (50) according to claim 15 or claim 16, **characterized in that** the hydraulic system operates at a constant volumetric flow rate, wherein at least one hydraulic motor (10) is provided in order to drive the at least one suction arm (5a, 5b).

## Revendications

1. Tamis de radiateur (1) comprenant un dispositif de nettoyage (2), le tamis de radiateur (1) comportant un élément de bâti (3) à l'intérieur duquel est conçue une surface en forme de tamis (4), et le dispositif de nettoyage (2) est conçu à la manière d'un dispositif d'aspiration qui se déplace cycliquement sur la surface (4) du tamis de radiateur (1) et qui ramasse des particules déposées sur la surface (4), **caractérisé en ce que** le dispositif d'aspiration inclut deux bras d'aspiration (5a, 5b) qui, au moyen de points de montage (20) positionnés en diagonale l'un par rapport à l'autre à l'intérieur du tamis de radiateur (1), sont montés à pivotement autour d'un axe (19) orienté verticalement par rapport à la surface (4).

2. Tamis de radiateur (1) selon la revendication 1, **caractérisé en ce que**, dans la position de repos dans laquelle le dispositif d'aspiration est inactif, les bras d'aspiration (5a, 5b) sont positionnés au voisinage l'un de l'autre.

3. Tamis de radiateur (1) selon la revendication 1 ou 2, **caractérisé en ce que** les bras d'aspiration (5a, 5b) sont respectivement pivotants selon un angle d'au moins 85°.

4. Tamis de radiateur (1) selon une des revendications précédentes, **caractérisé en ce que** les bras d'aspiration (5a, 5b) comportent respectivement une buse d'aspiration (13) et un élément de capot (14), lesquels sont disposés parallèlement l'un à l'autre sur le point de montage respectif (20), la surface (4) du tamis de radiateur (1) se trouvant entre la buse d'aspiration (13) et l'élément de capot (14).

5. Tamis de radiateur (1) selon une des revendications précédentes, **caractérisé en ce que**, pour entraîner l'un des bras d'aspiration, (5a), il est prévu un entraînement à manivelle (9) dans la zone du point de montage (20) du bras d'aspiration (5a).

6. Tamis de radiateur (1) selon la revendication 5, **caractérisé en ce que** l'autre bras d'aspiration (5b) est couplé de manière motrice au bras d'aspiration entraîné (5a).

7. Tamis de radiateur (1) selon la revendication 6, **caractérisé en ce que** le couplage moteur est agencé de façon que l'autre bras d'aspiration (5b) effectue, au moyen du couplage moteur, un mouvement de sens opposé à celui du bras d'aspiration (5a) entraîné au moyen de l'entraînement à manivelle (9).

8. Tamis de radiateur (1) selon la revendication 6 ou 7, **caractérisé en ce que** le couplage moteur s'effectue au moyen d'une tige de couplage (11) qui agit, par une extrémité, sur l'entraînement à manivelle (9) et, par son autre extrémité, dans la zone du point de montage (20) situé en diagonale par rapport à celui-ci, sur l'autre bras d'aspiration (5b).

9. Tamis de radiateur (1) selon une des revendications précédentes, **caractérisé en ce que** la tige de couplage (11) est disposée dans un plan situé derrière les éléments de capot (14).

10. Tamis de radiateur (1) selon une des revendications précédentes, **caractérisé en ce que**, pour l'entraînement d'au moins un bras d'aspiration (5a, 5b), est prévu un moteur (19), en particulier un moteur électrique ou un moteur hydraulique.

11. Tamis de radiateur (1) selon une des revendications précédentes, **caractérisé en ce que**, pour l'entraînement d'au moins un bras d'aspiration (5a, 5b), est prévu un vérin hydraulique à actionnement alterné (33) qui agit sur un bras de levier (22) d'un moyen de réception d'aspiration (15) recevant le bras d'aspiration (5a, 5b) .

12. Tamis de radiateur (1) selon une des revendications précédentes, **caractérisé en ce que** chaque bras d'aspiration (5a, 5b) est relié respectivement à un canal d'aspiration (6) qui débouche dans un carter (8) d'un ventilateur aspirant (7).

13. Tamis de radiateur (1) selon une des revendications précédentes, **caractérisé en ce que** le bras d'aspiration respectif (5a, 5b) comporte une zone de sortie cylindrique (13b) qui est disposée sensiblement coaxialement à l'axe (19) du point de montage respectif (20).

14. Tamis de radiateur (1) selon une des revendications précédentes, **caractérisé en ce que** la surface (4) du tamis de radiateur (1) est de forme sensiblement parallélépipédique.

15. Machine de récolte automotrice (50), en particulier moissonneuse-batteuse ou ensileuse, comprenant un moteur à combustion interne (51) ainsi qu'un système hydraulique, au moteur à combustion interne (51) étant associé un dispositif de refroidissement (52) comprenant un tamis de radiateur (1) qui est associé selon une des revendications précédentes.

16. Machine de récolte automotrice (50) selon la revendication 15, **caractérisée en ce que** la surface (4) du tamis de radiateur (1) et le dispositif de nettoyage (2) sont disposés sur un élément de bâti commun (3) du tamis de radiateur (1), lequel est disposé sur la machine de récolte (50) de manière pivotante par rapport au dispositif de refroidissement (52).

17. Machine de récolte automotrice (50) selon la revendication 15 ou 16, **caractérisée en ce que** le système hydraulique de la machine de récolte (50) est conçu sous la forme d'un système à pression constante, pour l'entraînement du au moins un bras d'aspiration (5a, 5b) étant prévu au moins un vérin hydraulique (33) qui est peut être mis en pression de manière alternée.

18. Machine de récolte automotrice (50) selon la revendication 15 ou 16, **caractérisée en ce que** le système hydraulique fonctionne avec un flux volumique constant, pour l'entraînement du au moins un bras d'aspiration (5a, 5b) étant prévu au moins un moteur hydraulique (10).
